# FASCICULE DE BREVET EUROPEEN

(11) **EP 1 716 916 B1**
(45) Date de publication et mention de la délivrance du brevet: **12.12.2007**
(21) Numéro de dépôt: 06300369.3
(22) Date de dépôt: 13.04.2006
(51) Int. Cl.: B01F 3/04

(54) **Dispositif d'agitation d'un liquide et d'injection d'un gaz dans ce liquide adapté à des bassins de faibles profondeurs**
Vorrichtung zum Rühren einer Flüssigkeit und zum Eindüsen eines Gases in diese Flüssigkeit, geeignet für Becken geringer Tiefe
Apparatus für stirring a fluid and injecting a gas into said fluid, adapted for ponds of low deepness.

(30) Priorité: 19.04.2005 FR 0550985
(43) Date de publication de la demande: 02.11.2006
(73) Titulaire: L'AIR LIQUIDE, Société Anonyme pour l'Etude et l'Exploitation des Procédés Georges Claude, 75007 Paris (FR)
(72) Inventeur: Chevalier, Gilbert, 78960 Voisins le Bretonneux (FR); Villermet, Alain, 78220 Viroflay (FR); Larquet, Christian, 78280 Guyancourt (FR)
(74) Mandataire: Ducreux, Marie

(56) Documents cités:
- EP-A- 0 995 485
- CH-A- 294 349
- GB-A- 1 221 022
- US-A- 6 109 449

## Description

La présente invention concerne un dispositif d'agitation d'un liquide dans un réacteur et d'injection d'un gaz dans ce liquide.

Le document EP-A1-0 995 485 décrit un dispositif d'agitation d'un liquide dans un réacteur, ou bassin, et d'injection d'un gaz dans ce liquide. Ce dispositif comprend un moteur d'entraînement d'un arbre vertical disposé au-dessus du réacteur. L'arbre du moteur porte et entraîne à son extrémité inférieure une hélice immergée dans le liquide ; il porte et entraîne également une turbine auto-aspirante placée entre la surface du liquide et l'hélice. La turbine auto-aspirante est connectée à une source de gaz, généralement un gaz oxygéné, de manière à ce que lorsqu'elle est entraînée par l'arbre du moteur, elle aspire à la fois du gaz et du liquide dans lequel elle est immergée, formant ainsi une dispersion gaz-liquide. La dispersion gaz-liquide générée par la turbine auto-aspirante est dirigée vers l'hélice à l'aide d'un caisson annulaire formant déflecteur qui enveloppe la turbine auto-aspirante.

Dans la pratique, la puissance de pompage de l'hélice engendre des courants descendants de liquide et de gaz pouvant atteindre plus de 7 mètres de profondeur. Aussi, lorsque le fond du bassin est situé à 7 mètres et moins, le courant impacte le fond. Cela n'a pas d'importance si les parois et le fond du réacteur sont en béton, ou si la profondeur excède 3 mètres. Au contraire, cela permet de mettre en mouvement les boues qui tendent à s'accumuler au fond du réacteur. Par contre, certains réacteurs possèdent des parois et un fond en membranes géotextiles ou en argile, qui sont très sensibles à l'abrasion. En général, ces bassins sont très peu profonds (1,5 à 3 mètres). L'impact d'un flux puissant érode et creuse de tels fonds, jusqu'à mettre en péril l'étanchéité du réacteur. De plus, la mise en mouvement de fortes quantités d'argile perturbe la décantation des boues en aval du bassin d'aération.

Le but de la présente invention est de proposer un dispositif d'agitation d'un liquide dans un réacteur et d'injection d'un gaz dans ce liquide, dans lequel un flux axial puissant est créé, pouvant être mis en oeuvre dans des bassins de faibles profondeurs ou dans des bassins aux parois friables.

Dans ce but, l'invention concerne un dispositif d'agitation d'un liquide dans un réacteur et d'injection d'un gaz dans ledit liquide pour former une dispersion gaz-liquide, comprenant :
- un dispositif d'entraînement disposé au-dessus du réacteur, pourvu d'un arbre de sortie vertical équipé à son extrémité inférieure d'au moins un mobile à flux axial immergé dans le liquide,
- un moyen d'introduction du gaz au-dessus du mobile à flux axial,
- un déflecteur placé au-dessus du mobile à flux axial empêchant la remontée de la dispersion gaz-liquide,
et comprenant un déflecteur placé au-dessous du mobile à flux axial transformant le flux axial dudit mobile en flux radial.

D'autres caractéristiques et avantages de l'invention apparaîtront à la lecture de la description qui va suivre. Des formes et des modes de réalisation de l'invention sont donnés à titre d'exemples non limitatifs, illustrés par les dessins joints dans lesquels :
- la figure 1 est une vue d'un dispositif selon l'invention,
- la figure 2 est une vue du déflecteur placé au-dessous du mobile à flux axial et transformant le flux axial dudit mobile en flux radial utilisable dans le dispositif selon l'invention,
- la figure 3 est une vue du dessous d'un dispositif selon l'invention,
- la figure 4 est une coupe transversale du déflecteur mise en oeuvre sur la figure 3.

Dans ce qui suit, le terme « réacteur » signifie « bassin » naturel ainsi que « réservoir » à parois plus ou moins proches et à ciel plus ou moins fermé.

L'invention concerne donc un dispositif d'agitation d'un liquide dans un réacteur et d'injection d'un gaz dans ledit liquide pour former une dispersion gaz-liquide, comprenant :
- un dispositif d'entraînement disposé au-dessus du réacteur, pourvu d'un arbre de sortie vertical équipé à son extrémité inférieure d'au moins un mobile à flux axial immergé dans le liquide,
- un moyen d'introduction du gaz au-dessus du mobile à flux axial,
- un déflecteur placé au-dessus du mobile à flux axial empêchant la remontée de la dispersion gaz-liquide,
et comprenant un déflecteur placé au-dessous du mobile à flux axial transformant le flux axial dudit mobile en flux radial.

Selon l'invention, le dispositif d'agitation comprend un dispositif d'entraînement, par exemple un moteur, disposé au-dessus de la surface du liquide, pourvu d'un arbre rotatif de sortie s'étendant verticalement et partiellement immergé dans le liquide. L'arbre porte à son extrémité inférieure un mobile à flux axial, qui peut être une hélice ou une vis, immergé dans le liquide, et dirigeant généralement le liquide vers le bas du bassin. Le dispositif comprend également un moyen d'introduction du gaz au-dessus du mobile à flux axial et dans le liquide de manière à ce que le gaz et le liquide soient entraînés par le mobile à flux axial et qu'une dispersion gaz-liquide soit créée. Le dispositif comprend enfin un déflecteur placé au-dessus du mobile à flux axial de forme telle qu'il empêche la remontée de la dispersion gaz-liquide. Cette forme peut permettre de diriger le flux axial vers le bas du bassin et/ou peut servir de collecteur de gaz empêchant ce dernier de s'échapper à la surface du bassin. La caractéristique essentielle de l'invention tient à ce qu'un déflecteur supplémentaire est placé au-dessous du mobile à flux axial et est d'une forme telle qu'il transforme le flux axial créé par le mobile en flux radial.

Selon une première variante du dispositif selon l'invention, le déflecteur placé au-dessous du mobile à flux axial peut être un plateau, généralement circulaire. De préférence, ce plateau est centré sur l'arbre de sortie. Il peut être avantageux de placer ce déflecteur placé au-dessous du mobile à flux axial à la plus grande distance possible dudit mobile de manière à exploiter au mieux la profondeur disponible sous le dispositif d'agitation. Généralement, la surface du déflecteur placé au-dessous du mobile à flux axial est augmentée en fonction de la distance entre ce déflecteur et ce mobile à flux axial. A titre indicatif, pour une distance déflecteur - mobile à flux axial inférieure à 200 mm, il suffit que la surface du déflecteur soit au moins de l'ordre de la surface projetée sur lui par le mobile à flux axial. La surface du déflecteur peut également être étendue à la surface projetée sur lui par le dispositif d'agitation global.

Un cône de déflection ou un prisme peut être centré sur le plateau. L'angle du cône ou du prisme peut être optimisé en fonction de la distance entre le déflecteur placé au-dessous du mobile à flux axial et ledit mobile à flux axial.

D'un point de vue pratique, le déflecteur placé au-dessous du mobile à flux axial peut être fixé sur l'arbre de sortie du dispositif d'entraînement. Lors du fonctionnement du dispositif, le déflecteur placé au-dessous du mobile à flux axial est alors également entraîné par le moteur. Cette mise en oeuvre présente l'avantage de permettre de modifier rapidement un dispositif de l'art antérieur pour l'adapter à des bassins de faibles profondeurs : il suffit de rajouter un déflecteur sur l'arbre d'entraînement.

Selon une deuxième variante de l'invention, le déflecteur placé au-dessous du mobile à flux axial est constitué :
- d'un plateau central, et
- de portions de surface angulairement réparties autour du plateau central et présentant un profil évolutif divergent vers l'extérieur et vers le fond du réacteur.

Le profil divergent des portions de surfaces est avantageusement calculé de façon à offrir une section de passage minimale sous le mobile à flux axial, ladite section allant s'élargissant vers le bas. Cette section minimale peut représenter 1,5 à 3 fois la section projetée du mobile à flux axial. La forme du profil divergent permet de forcer le flux de la dispersion gaz/liquide à s'engouffrer entre les portions de surface et l'axe central du mobile. Il est préférable que le diamètre d'enroulement des portions de surfaces ne soit pas inférieur au diamètre du mobile à flux axial.

Selon cette variante, le déflecteur est donc constitué de deux parties : le plateau central et les portions de surface angulairement réparties autour du plateau. Le plateau central est de préférence circulaire. Il peut être fixé sur l'arbre de sortie du dispositif d'entraînement comme pour la première variante. Un cône de déflection peut avantageusement remplacer le plateau central. A distance du plateau central ou du cône se trouvent des portions de surface angulairement réparties autour du plateau. Selon l'invention, ces portions de surface présentant un profil évolutif divergent vers l'extérieur et vers le fond du réacteur : ainsi, en coupe transversale selon un plan passant par l'arbre de sortie vertical, ces surfaces présentent un profil qui s'écarte vers l'extérieur et le fond du réacteur. Ce profil est généralement courbé afin de générer un effet de type Coanda à tout écoulement rapide circulant tangentiellement à l'entrée du profil. Par la combinaison de ces deux parties du mobile, le flux axial provenant du mobile à flux axial est redirigé par le plateau central ou le cône tangentiellement au profil décrit par les surfaces précédemment décrites: il est plaqué contre les portions de surface angulairement réparties autour du plateau central ou du cône. L'effet Coanda ainsi obtenu maintient l'écoulement de la dispersion gaz/liquide plaqué sous les portions de surface. Cet écoulement est libéré en extrémité du profil suivant l'angle défini par celui-ci ; de préférence, l'extrémité du profil est à l'horizontale pour obtenir un flux radial dirigé vers les parois verticales du réacteur.

Cette deuxième variante permet de limiter la perte de charge lorsque le flux axial rentre en contact avec le déflecteur et d'uniformiser l'écoulement. La vitesse du liquide redirigé par le déflecteur est très rapide et le débit élevé ; par conséquent, le fonctionnement du mobile à flux axial n'est pas entravé par le déflecteur ajouté. Les conditions de transfert du gaz dans le liquide restent optimales.

Selon l'angle en extrémité du profil permettant de générer l'effet Coanda, l'éjection radiale du flux peut être contrôlée par rapport à la verticale. Il est ainsi possible de mieux répartir le flux dans le bassin.

Selon le mode préféré de l'invention, le dispositif présente un moyen d'introduction du gaz au-dessus du mobile à flux axial particulier, qui est constitué :
- d'une turbine auto-aspirante immergée dans le réacteur, placée au-dessus du mobile à flux axial et pouvant être entraînée par l'arbre de sortie, et
- d'un cylindre enveloppant coaxialement l'arbre de sortie, dont l'extrémité inférieure débouche dans la turbine et dont l'extrémité supérieure est liée de manière étanche au dispositif d'entraînement et est percée d'une ouverture d'injection d'un gaz dans un intervalle annulaire délimité par l'arbre et le cylindre,
la turbine étant constituée de deux disques superposés et d'un ensemble d'aubes radiales disposées entre les disques et fixées à ceux-ci, le disque supérieur étant percé d'un trou central dans lequel pénètre l'extrémité inférieure du cylindre qui délimite avec le bord dudit trou un espace au moins partiellement annulaire par lequel du liquide est aspiré dans la turbine.

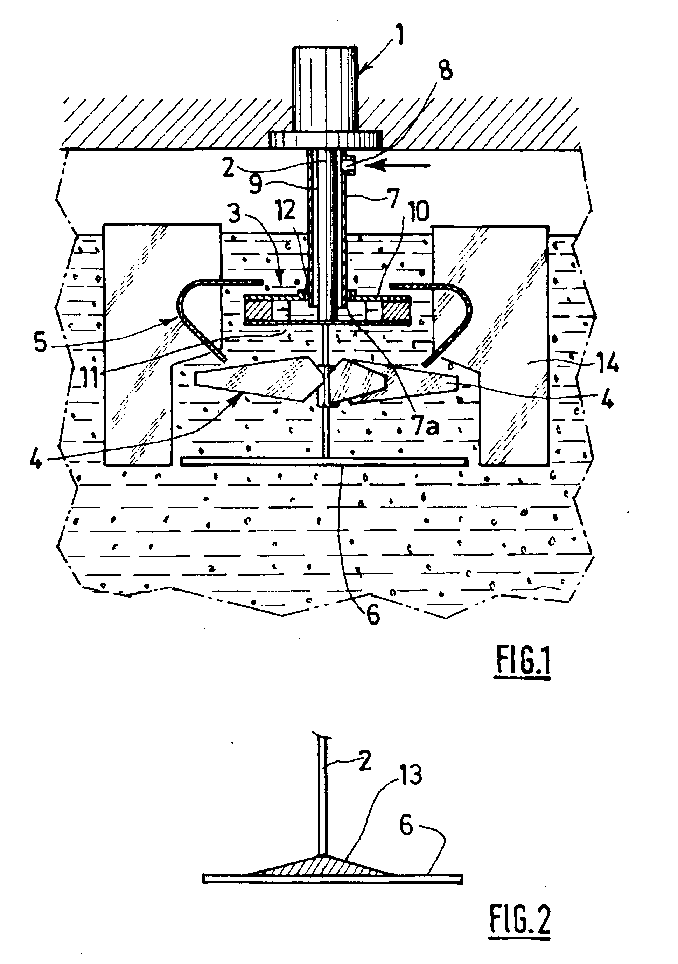

La figure 1 permet de caractériser un dispositif selon la présente invention. Le dispositif comprend un dispositif d'entraînement 1, par exemple un moteur, disposé au-dessus de la surface du liquide, pourvu d'un arbre rotatif de sortie 2 s'étendant verticalement et partiellement immergé dans le liquide. L'arbre 2 porte à son extrémité inférieure un mobile à flux axial 4, une hélice, immergé dans le liquide. L'arbre 2 porte également, disposée entre l'hélice 4 et la surface du liquide, une turbine auto-aspirante 3 qui est par conséquent immergée dans le réacteur et est entraînée par l'arbre de sortie 2 à la même vitesse que l'hélice 4. L'arbre de sortie 2 est enveloppé coaxialement par un cylindre 7 lié à son extrémité supérieure au dispositif d'entraînement 1, avec interposition d'un dispositif d'étanchéité, et dont l'extrémité inférieure 7a débouche dans la turbine 3 coaxialement à l'arbre 2. Dans l'extrémité supérieure du cylindre 7 est percée une ouverture 8 d'injection d'un gaz dans l'intervalle annulaire 9 délimité par l'arbre 2 et par le cylindre 7. Le système d'injection de gaz dans l'orifice 8 n'est pas représenté. La turbine auto-aspirante 3 est constituée de deux disques 10, 11 placés horizontalement, et d'un ensemble d'aubes radiales, placées entre les disques 10, 11 et fixées à ceux-ci. Un premier déflecteur 5 est placé au-dessus de la turbine 3 et du mobile à flux axial 4. Un second déflecteur 6 est placé sur l'arbre 2 au-dessous de l'hélice à flux axial 4. Le dispositif de la figure 1 comprend également des contre-pales 14 permettant de diriger les différents flux afin de maximiser les performances en terme de transfert et d'agitation.

La figure 2 illustre un déflecteur 6 destiné à être placé au-dessous du mobile à flux axial présentant la forme d'un plateau, centré sur l'arbre de sortie 2, et au centre duquel est placé un cône de déflection 13.

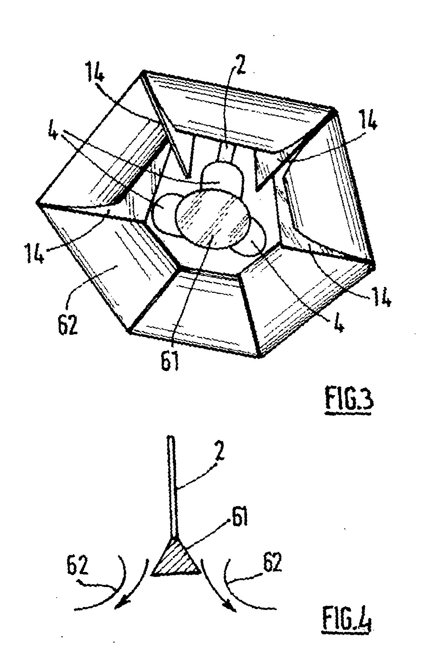

La figure 3 illustre un dispositif selon l'invention vu de dessous. Ce dispositif est équipé d'un déflecteur 61, 62 placé au-dessous du mobile à flux axial 4 dont trois pales peuvent être identifiées sur le dessin. Ce déflecteur est constitué d'un plateau circulaire central 61, et de portions de surface 62 angulairement réparties autour du plateau circulaire central 61 et présentant un profil évolutif divergent vers l'extérieur. Cette forme particulière provoque un effet de type Coanda à tout écoulement s'engouffrant tangentiellement au profil décrit par les potions de surface 62. Ces portions de surface 62 sont fixées aux contre-pales 14 du dispositif d'agitation.

La figure 4 est une coupe transversale selon l'axe xx' du déflecteur de la figure 3 : on peut observer le cône déflecteur 61 centré sur le plateau central et le profil permettant de générer l'effet Coanda des portions de surface 62 angulairement réparties autour du plateau central. Les flèches représentent le courant du flux le long du plateau central ou cône déflecteur (61) et des portions angulairement réparties autour du plateau ou cône central.

Par mise en oeuvre d'un dispositif tel que précédemment décrit, le flux axial du mobile à flux axial est dévié et l'impact du flux axial sur le fond du bassin est évité.

## Revendications

1. Dispositif d'agitation d'un liquide dans un réacteur et d'injection d'un gaz dans ledit liquide pour former une dispersion gaz-liquide, comprenant :
- un dispositif d'entraînement (1) disposé au-dessus du réacteur, pourvu d'un arbre de sortie (2) vertical équipé à son extrémité inférieure d'au moins un mobile à flux axial (4) immergé dans le liquide,
- un moyen d'introduction du gaz (3 et 7) au-dessus du mobile à flux axial (4),
- un déflecteur (5) placé au-dessus du mobile à flux axial (4) empêchant la remontée de la dispersion gaz-liquide,
**caractérisé en ce qu**'il comprend un déflecteur (6) placé au-dessous du mobile à flux axial (4) transformant le flux axial dudit mobile en flux radial.

2. Dispositif selon la revendication 1, **caractérisé en ce que** le déflecteur (6) placé au-dessous du mobile à flux axial (4) est un plateau.

3. Dispositif selon la revendication 2, **caractérisé en ce que** le plateau est centré sur l'arbre de sortie (2).

4. Dispositif selon la revendication 2 ou 3, **caractérisé en ce qu**'un cône de déflection (14) est centré sur le plateau.

5. Dispositif selon la revendication 2 ou 3, **caractérisé en ce qu**'un prisme de déflection est centré sur le plateau.

6. Dispositif selon l'une des revendications précédentes, **caractérisé en ce que** la surface du déflecteur (6) placé au-dessous du mobile à flux axial (4) est étendue à la surface projetée sur lui par le dispositif d'agitation.

7. Dispositif selon l'une des revendications précédentes, **caractérisé en ce que** le déflecteur (6) placé au-dessous du mobile à flux axial (4) est fixé sur l'arbre de sortie (2) du dispositif d'entraînement (1).

8. Dispositif selon la revendication 1, **caractérisé en ce que** le déflecteur (6) placé au-dessous du mobile à flux axial est constitué :
- d'un plateau central (61), et
- de portions de surface (62) angulairement réparties autour du plateau circulaire central (61) et présentant un profil évolutif divergent vers l'extérieur et vers le fond du réacteur.

9. Dispositif selon la revendication 8, **caractérisé en ce que** le profil évolutif divergent des portions de surface (62) est de nature à provoquer un effet Coanda sur tout écoulement s'engouffrant tangentiellement dans la section décrite par le profil évolutif divergent.

10. Dispositif selon la revendication 8 ou 9, **caractérisé en ce que** le plateau central (61) est fixé sur l'arbre de sortie du dispositif d'entraînement (2).

11. Dispositif selon l'une des revendications 8 à 10, **caractérisé en ce qu**'un cône de déflection est centré sur le plateau central (61).

12. Dispositif selon l'une des revendications précédentes, **caractérisé en ce que** :
- le moyen d'introduction du gaz au-dessus du mobile à flux axial est constitué :
. d'une turbine auto-aspirante (3) immergée dans le réacteur, placée au-dessus du mobile à flux axial (4) et pouvant être entraînée par l'arbre de sortie (2), et
. d'un cylindre (7) enveloppant coaxialement l'arbre de sortie (2), dont l'extrémité inférieure (7a) débouche dans la turbine (3) et dont l'extrémité supérieure est liée de manière étanche au dispositif d'entraînement (1) et est percée d'une ouverture (8) d'injection d'un gaz dans un intervalle annulaire (9) délimité par l'arbre (2) et le cylindre (7),
- la turbine (3) étant constituée de deux disques superposés (10, 11) et d'un ensemble d'aubes radiales disposées entre les disques et fixées à ceux-ci, le disque supérieur (10) étant percé d'un trou central (12) dans lequel pénètre l'extrémité inférieure (7a) du cylindre (7) qui délimite avec le bord dudit trou un espace au moins partiellement annulaire par lequel du liquide est aspiré dans la turbine (3).

## Claims

1. Device for stirring a liquid in a reactor and for injecting a gas into the said liquid in order to form a gas-liquid dispersion, comprising:
- a drive device (1) positioned above the reactor, provided with a vertical output shaft (2) fitted at its lower end with at least one axial flow rotor (4) immersed in the liquid;
- means for introducing gas (3 and 7) above the axial flow rotor (4); and
- a deflector (5) placed above the axial flow rotor (4) preventing the gas-liquid dispersion from rising,
**characterized in that** it comprises a deflector (6) placed below the axial flow rotor (4) converting the axial flow of the said rotor into a radial flow.

2. Device according to Claim 1, **characterized in that** the deflector (6) placed below the axial flow rotor (4) is a plate.

3. Device according to Claim 2, **characterized in that** the plate is centred on the output shaft (2).

4. Device according to Claim 2 or 3, **characterized in that** a deflector cone (14) is centred on the plate.

5. Device according to Claim 2 or 3, **characterized in that** a deflector prism is centred on the plate.

6. Device according to one of the preceding claims, **characterized in that** the surface area of the deflector (6) placed below the axial flow rotor (4) is extended to the area projected onto it by the stirring device.

7. Device according to one of the preceding claims, **characterized in that** the deflector (6) placed below the axial flow rotor (4) is fixed to the output shaft (2) of the drive device (1).

8. Device according to Claim 1, **characterized in that** the deflector (6) placed below the axial flow rotor consists of:
- a central plate (61); and
- surface portions (62) distributed angularly around the central circular plate and having a progressive profile diverging outwards and towards the bottom of the reactor.

9. Device according to Claim 8, **characterized in that** the divergent progressive profile of the surface portions (62) is able to bring about a Coanda effect on any flow surging tangentially in the section described by the divergent progressive profile.

10. Device according to Claim 8 or 9, **characterized in that** the central plate (61) is fixed to the output shaft of the drive device (2).

11. Device according to one of Claims 8 to 10, **characterized in that** a deflector cone is centred on the central plate (61).

12. Device according to one of the preceding claims, **characterized in that**:
- the means for introducing gas above the axial flow rotor consists of:
. a self-aspirating turbine (3) immersed in the reactor, placed above the axial flow rotor (4) and which can be driven by the output shaft (2) and
. a cylinder (7) coaxially enveloping the output shaft (2), the lower end (7a) of which emerges in the turbine (3) and the upper end of which is connected in a sealed manner to the drive device (1) and is drilled with an opening (8) for injecting a gas into an annular gap (9) delimited by the shaft (2) and the cylinder (7);
- the turbine (3) consisting of two superimposed discs (10, 11) and an assembly of radial blades arranged between the discs and attached thereto, the upper disc (10) being drilled with a central hole (12) into which the lower end (7a) of the cylinder (7) enters which delimits, with the edge of the said hole, a space that is at least partially annular, through which liquid is drawn into the turbine (3).

## Patentansprüche

1. Vorrichtung zum Rühren einer Flüssigkeit in einem Reaktor und zum Einleiten eines Gases in die Flüssigkeit, um eine Gas-Flüssig-Dispersion zu bilden, umfassend:
- eine Antriebsvorrichtung (1), die über dem Reaktor angeordnet und mit einer vertikalen Ausgangswelle (2) versehen ist, die an ihrem unteren Ende mit mindestens einem in die Flüssigkeit getauchten Axialflussmobile (4) ausgestattet ist,
- ein Mittel zur Einleitung des Gases (3 und 7) über dem Axialflussmobile (4),
- ein Ablenkblech (5), das über dem Axialflussmobile (4) angeordnet ist und das Hochsteigen der Gas-Flüssig-Dispersion verhindert,
**dadurch gekennzeichnet, dass** sie ein Ablenkblech (6) umfasst, das unter dem Axialflussmobile (4) angeordnet ist und den Axialfluss des Mobiles in einen Radialfluss umwandelt.

2. Vorrichtung nach Anspruch 1, **dadurch gekennzeichnet, dass** das Ablenkblech (6), das unter dem Axialflussmobile (4) angeordnet ist, eine Platte ist.

3. Vorrichtung nach Anspruch 2, **dadurch gekennzeichnet, dass** die Platte auf der Ausgangswelle (2) zentriert ist.

4. Vorrichtung nach Anspruch 2 oder 3, **dadurch gekennzeichnet, dass** ein Ablenkkegel (14) auf der Platte zentriert ist.

5. Vorrichtung nach Anspruch 2 oder 3, **dadurch gekennzeichnet, dass** ein Ablenkprisma auf der Platte zentriert ist.

6. Vorrichtung nach einem der vorhergehenden Ansprüche, **dadurch gekennzeichnet, dass** die Fläche des Ablenkblechs (6), das über dem Axialflussmobile (4) angeordnet ist, auf die auf sie von der Rührvorrichtung projizierte Fläche erweitert ist.

7. Vorrichtung nach einem der vorhergehenden Ansprüche, **dadurch gekennzeichnet, dass** das Ablenkblech (6), das unter dem Axialflussmobile (4) angeordnet ist, auf der Ausgangswelle (2) der Antriebsvorrichtung (1) befestigt ist.

8. Vorrichtung nach Anspruch 1, **dadurch gekennzeichnet, dass** das Ablenkblech (6), das unter dem Axialflussmobile angeordnet ist, gebildet ist von:
- einer zentralen Platte (61), und
- Flächenabschnitten (62), die winkelig um die zentrale kreisförmige Platte (61) verteilt sind und ein nach außen und zum Boden des Reaktors divergierendes Erweiterungsprofil aufweisen.

9. Vorrichtung nach Anspruch 8, **dadurch gekennzeichnet, dass** das divergierende Erweiterungsprofil der Flächenabschnitte (62) derart ist, dass es eine Coanda-Wirkung auf dem gesamten Fluss hervorruft, der sich tangential in dem vom divergierenden Erweiterungsprofil beschriebenen Abschnitt verfängt.

10. Vorrichtung nach Anspruch 8 oder 9, **dadurch gekennzeichnet, dass** die zentrale Platte (61) auf der Ausgangswelle der Antriebsvorrichtung (2) befestigt ist.

11. Vorrichtung nach einem der Ansprüche 8 bis 10, **dadurch gekennzeichnet, dass** ein Ablenkkegel auf der zentralen Platte (61) zentriert ist.

12. Vorrichtung nach einem der vorhergehenden Ansprüche, **dadurch gekennzeichnet, dass**:
- das Mittel zur Einleitung des Gases über dem Axialflussmobile gebildet ist von:
• einer automatischen Saugturbine (3), die in den Reaktor getaucht, über dem Axialflussmobile (4) angeordnet ist und von der Ausgangswelle (2) angetrieben werden kann, und
• einem Zylinder (7), der koaxial die Ausgangswelle (2) umhüllt, dessen unteres Ende (7a) in die Turbine (3) mündet und dessen oberes Ende dicht mit der Antriebsvorrichtung (1) verbunden ist und eine Öffnung (8) zum Einleiten eines Gases in einen ringförmigen Zwischenraum (9), der von der Welle (2) und dem Zylinder (7) begrenzt ist, aufweist,
- wobei die Turbine (3) von zwei übereinander angeordneten Scheiben (10, 11) und einer Gesamtheit von radialen Schaufeln gebildet ist, die zwischen den Scheiben angeordnet und an diesen befestigt sind, wobei die obere Scheibe (10) ein zentrales Loch (12) aufweist, in das das untere Ende (7a) des Zylinders (7) eindringt, der mit dem Rand des Loches einen zumindest teilweise ringförmigen Raum begrenzt, durch den Flüssigkeit in die Turbine (3) angesaugt wird.
